# EUROPÄISCHE PATENTSCHRIFT

(11) **EP 4 179 233 B1**
(45) Veröffentlichungstag und Bekanntmachung des Hinweises auf die Patenterteilung: **22.05.2024**
(21) Anmeldenummer: 21742781.4
(22) Anmeldetag: 06.07.2021
(51) Int. Cl.: F16H 61/30, F16H 63/20, F16H 59/68, F16H 59/70, F16H 63/30

(54) **BETÄTIGUNGSVORRICHTUNG FÜR EIN AUTOMATISIERTES SCHALTGETRIEBE**
OPERATING DEVICE FOR AN AUTOMATIC GEARBOX
DISPOSITIF DE COMMANDE POUR UNE BOÎTE DE VITESSES AUTOMATIQUE

(30) Priorität: 08.07.2020 DE 102020118052
(43) Veröffentlichungstag der Anmeldung: 17.05.2023
(73) Patentinhaber: ZF CV Systems Europe BV, 1170 Brüssel (BE)
(72) Erfinder: GÜNTHER, Michael, 30974 Wennigsen (DE); JANZEN, Hans, 30966 Hemmingen (DE); DEITERS, Henning, 30519 Hannover (DE); GORA, Rafal, 54-129 Wroclaw (PL); KASZUBA, Damian, 50-504 Wroclaw (PL)
(74) Vertreter: Ohlendorf, Henrike
(86) Internationale Anmeldenummer: PCT/EP2021/068562
(87) Internationale Veröffentlichungsnummer: WO 2022/008467

(56) Entgegenhaltungen:
- EP-A1- 3 470 708
- CN-U- 202 708 037
- DE-A1-102015 116 654
- DE-A1-102018 003 749

## Beschreibung

Die Erfindung betrifft eine Betätigungsvorrichtung für ein automatisiertes Schaltgetriebe eines Kraftfahrzeugs, mittels der ein Wähl- oder Schaltelement des Schaltgetriebes zur Einstellung einer Schaltgasse oder zum Einlegen beziehungsweise Auslegen eines Getriebegangs bewegbar ist, wobei die Betätigungsvorrichtung einen druckmittelbetriebenen Aktuator mit einem Kolben und einer mit dem Wähl- oder Schaltelement des Schaltgetriebes verbindbare Kolbenstange aufweist, wobei der Kolben in einem zylindrischen Aufnahmeraum des Gehäuses der Betätigungsvorrichtung radial abgedichtet angeordnet und dort koaxial bewegbar ist, wobei eine Sensoranordnung mit einem Magneten und einem magnetfeldsensitiven Sensor vorhanden ist, und wobei der Magnet mittels einer Haltevorrichtung kolbenstangenfern stirnseitig am Kolben sowie der Sensor gehäuseseitig radial gegenüber dem Magneten angeordnet sind.

Aus der DE 10 2005 034 865 A1 ist eine Stellvorrichtung für ein Kraftfahrzeuggetriebe bekannt. Diese Stellvorrichtung weist mindestens ein bewegliches Stellelement auf, dessen Position von zumindest einem Sensor detektiert wird, wobei eine Code-Bahn vorhanden ist, welche Abschnitte mit unterschiedlichen Höhen aufweist, die dazu ausgebildet sind, von dem Sensor abgetastet zu werden. Hierbei ist vorgesehen, dass die Abschnitte der Code-Bahn mit unterschiedlichen Höhen zumindest zweidimensional angeordnet sind. Vorzugsweise werden die Abschnitte der Code-Bahn mit unterschiedlichen Höhen von einem Sensor berührungslos abgetastet. Eine solche vollständige mechanische Entkopplung ist unter bestimmten Umgebungsbedingungen von Vorteil, wie zum Beispiel bei großen Temperaturschwankungen oder bei starken Vibrationen. Der mindestens eine Sensor kann gemäß diesem Stand der Technik ein Hall-Sensor sein, der berührungslos mit einem Magneten zusammenwirkt.

Außerdem ist aus der DE 10 2016 012 862 A1 ein Schaltmodul für ein automatisiertes Schaltgetriebe bekannt, welches einen kastenartigen Modulträger aufweist, in dem eine elektronische Steuereinheit angeordnet ist. Parallel zu einer dem Getriebeinnenraum zugewandten Bodenwand des Modulträgers sind mehrere Schaltstangen axialbeweglich angeordnet. An den Schaltstangen ist jeweils eine Schaltgabel befestigt. Die Schaltstangen stehen jeweils mit einem beweglichen Teil eines Schaltzylinders in Wirkverbindung. Ferner sind magnetfeldsensitive Positionssensoren mit einem schaltstangenseitigen Positionsgeber und einem gehäusefesten Positionsaufnehmer vorhanden, um die Schaltpositionen der zugeordneten Schaltstangen zu erfassen. Zur Erhöhung der Genauigkeit bei der Erfassung der Schaltposition einer zugeordneten Schaltmuffe sowie zur Reduzierung des Aufwands zum Schutz des Positionsaufnehmers und der betreffenden Sensorleitung vor einem Kontakt mit Getriebeöl sowie vor mechanischen Beschädigungen ist der Positionsgeber in geringem Abstand zur Bodenwand des Modulträgers am Schaltgabelkopf befestigt. Zudem ist der Positionsaufnehmer geschützt innerhalb des Modulträgers im Bewegungsbereich des Positionsgebers auf der Innenseite der Bodenwand des Modulträgers angeordnet.

Die EP 3 470 708 A1 zeigt eine Betätigungsvorrichtung für die Betätigung einer Schaltstange eines Schaltgetriebes gemäß dem Oberbegriff des Patentanspruchs 1.

Der Erfindung liegt die Aufgabe zugrunde, eine gattungsgemäße Betätigungsvorrichtung mit einem Aktuator in Form einer Kolben-Zylinder-Anordnung vorzustellen, welcher an seinem beweglichen Stellelement einen Magneten aufweist, der als Teil einer Sensoranordnung zur Positionsbestimmung des Stellelements beziehungsweise zur Positionsbestimmung des von dem Stellelement betätigten Getriebeelements dient. Hierbei soll gewährleistet sein, dass sich das Stellelement zwar koaxial zur Längsmittenachse des Aktuators bewegen sowie um diese Längsmittenachse drehen kann, eine Rotation des Magneten um diese Längsmittenachse soll jedoch unterbunden sein.

Die Lösung dieser Aufgabe wird mit einer Betätigungsvorrichtung erreicht, welche die Merkmale des Anspruchs 1 aufweist. Vorteilhafte Weiterbildungen sind in den abhängigen Ansprüchen definiert.

Demnach betrifft die Erfindung eine Betätigungsvorrichtung für ein automatisiertes Schaltgetriebe eines Kraftfahrzeugs, mittels der ein Wähl- oder Schaltelement des Schaltgetriebes zur Einstellung einer Schaltgasse oder zum Einlegen beziehungsweise Auslegen eines Getriebegangs bewegbar ist, wobei die Betätigungsvorrichtung einen druckmittelbetriebenen Aktuator mit einem Kolben und einer mit dem Wähl- oder Schaltelement des Schaltgetriebes verbindbare Kolbenstange aufweist, wobei der Kolben in einem zylindrischen Aufnahmeraum des Gehäuses der Betätigungsvorrichtung radial abgedichtet angeordnet und dort koaxial bewegbar ist, wobei eine Sensoranordnung mit einem Magneten und einem magnetfeldsensitiven Sensor vorhanden ist, und wobei der Magnet mittels einer Haltevorrichtung kolbenstangenfern stirnseitig am Kolben sowie der Sensor gehäuseseitig radial gegenüber dem Magneten angeordnet sind.

Zur Lösung der genannten Aufgabe ist vorgesehen, dass die Haltevorrichtung um die Längsmittenachse des Aufnahmeraumes drehbar mit dem Kolben verbunden ist, dass die Haltevorrichtung eine hohlzylindrische oder hohlzylindersegmentförmige Geometrie aufweist, dass ein stabförmiges oder plattenförmiges Verdrehsicherungselement vorhanden ist, welches zumindest mit seinen beiden Enden in einer zugeordneten Aussparung im Gehäuse formschlüssig aufgenommen ist, und dass das Verdrehsicherungselement die hohlzylindrische oder hohlzylindersegmentförmige Haltevorrichtung mit Abstand zu dem Magneten mit geringem Spiel sekantenartig durchgreift, wodurch eine Axialbewegung und eine Drehbewegung des Kolbens zwar möglich sind, eine Drehbewegung der Haltevorrichtung um die Längsmittenachse des Aufnahmeraumes jedoch verhindert wird.

Demnach wird mittels des Verdrehsicherungselements eine Eigenrotation der Haltevorrichtung mit dem daran angeordneten Magneten um die Längsmittenachse des zylindrischen Aufnahmeraumes zuverlässig verhindert, in dessen Folge der Magnet stets positionsgenau auf das radial gegenüberliegend angeordnete Sensorelement ausgerichtet ist. Außerdem ist aufgrund des bevorzugt leicht spielbehafteten Zusammenwirkens von Haltevorrichtung und Verdrehsicherungselement die axiale Verschiebbarkeit der Haltevorrichtung mitsamt dem die Haltevorrichtung tragenden Kolbens sichergestellt.

Das Verdrehsicherungselement weist bevorzugt eine vergleichsweise geringe Baugröße auf und lässt sich ohne aufwendige spangebende Fertigungsschritte kostengünstig herstellen sowie in dem Gehäuse der Betätigungsvorrichtung montieren. Die vorzugsweise spielbehaftete Anordnung des Verdrehsicherungselements gleicht Fertigungstoleranzen aus und vermeidet im Betrieb die Entstehung von temperaturbedingten mechanischen Spannungen. Das Verdrehsicherungselement ist zudem leicht in eine vorhandene Konstruktion unter Verwendung bereits vorhandener Komponenten integrierbar. Ferner ist mittels des Verdrehsicherungselements eine Verschleißminderung realisierbar.

Gemäß einer technisch vorteilhaften Ausgestaltung der Betätigungsvorrichtung ist vorgesehen, dass die Haltevorrichtung zwei axial ausgerichtete Längsrippen aufweist, dass die Längsrippen jeweils eine in Richtung des Verdrehsicherungselements weisende plane Anlagefläche aufweisen, und dass die Anlageflächen zueinander beabstandet entlang einer gedachten Sekantenlinie der Haltevorrichtung angeordnet sind. Die planen und schmalen Anlageflächen der Längsrippen bewirken nur geringe zwischen der Haltevorrichtung und dem Verdrehsicherungselement wirkende Reibungskräfte, wodurch eine leichtgängige axiale Verschiebbarkeit der Haltevorrichtung und des Kolbens der Betätigungsvorrichtung gewährleistet ist.

Weiter ist bevorzugt vorgesehen, dass das Gehäuse der Betätigungsvorrichtung aus einem Unterteil und einem Oberteil besteht, welche mittels eines Dichtelements gegeneinander abgedichtet sind. Die Zweiteiligkeit des Gehäuses ermöglicht eine einfache Montage der Bauteile der Betätigungsvorrichtung.

Gemäß einer anderen Weiterbildung der Betätigungsvorrichtung ist vorgesehen, dass eine den Aufnahmeraum umgrenzende Wandung des Unterteils des Gehäuses wenigstens einen radial auswärts versetzt angeordneten sowie axial in Richtung zum Oberteil des Gehäuses gerichteten Haltezapfen aufweist, dass das Verdrehsicherungselement an seiner dem Unterteil des Gehäuses zugewandten Seite wenigstens eine Tasche aufweist, und dass ein jeder Haltezapfen in einer jeweils zugeordneten Tasche aufgenommen ist sowie stirnseitig am Boden der Tasche anliegt. Hierdurch ist eine zuverlässige Lagesicherung des Verdrehsicherungselements insbesondere bei dessen Montage erreicht. Der wenigstens eine Haltezapfen hat vorzugsweise eine zylindrische Geometrie und die wenigstens eine Tasche weist vorzugsweise eine topfförmige Geometrie auf. Zwischen der Tasche und dem Haltezapfen besteht beispielsweise ein geringfügiges mechanisches Spiel.

Das Verdrehsicherungselement weist vorzugsweise eine trapezförmige Geometrie auf. Dadurch ist dieses einfach sowie kostengünstig herstellbar. Zudem wird durch diese Geometrie ein zuverlässiger Sitz des Verdrehsicherungselements im Unterteil des Gehäuses der Betätigungsvorrichtung erreicht.

Weiter ist bevorzugt vorgesehen, dass eine zur Haltevorrichtung weisende Grundseite des Verdrehsicherungselements eine axial ausgerichtete radiale Vertiefung aufweist, und dass beidseitig neben dieser Vertiefung jeweils eine radial einwärts gerichtete Kontaktfläche an dem Verdrehsicherungselement ausgebildet ist. An diesen beiden Kontaktflächen können sich die Anlageflächen der beiden Längsrippen der Haltevorrichtung abstützen. Hierdurch ist eine Minimierung der mechanischen Kontaktfläche zwischen dem Verdrehsicherungselement und der Haltevorrichtung erreicht, wie noch anhand eines Ausführungsbeispiels weiter erläutert wird.

Das Verdrehsicherungselement ist vorzugsweise innerhalb einer nischenartigen sowie angenähert trapezförmigen Aussparung in der Wandung des hohlzylindrischen Aufnahmeraums des Gehäuses formschlüssig angeordnet. Hierdurch ist eine zuverlässige Aufnahme des Verdrehsicherungselements in der Seitenwand des Gehäuses erreicht.

Weiter ist bevorzugt vorgesehen, dass die beiden Kontaktflächen des Verdrehsicherungselements zumindest geringfügig spielbehaftet und jeweils parallel in Bezug zu den jeweiligen Anlageflächen der beiden Längsrippen der Haltevorrichtung positioniert sind. Die Kontaktflächen des Verdrehsicherungselements verlaufen hierbei im Wesentlichen parallel zu den Anlageflächen der Haltevorrichtung. Hierdurch wird eine besonders reibungsarme axiale Bewegbarkeit sowie Rotationsverhinderung der Haltevorrichtung für den Magneten erreicht.

Bevorzugt sind die Haltevorrichtung und das Verdrehsicherungselement aus demselben Werkstoff hergestellt, wodurch das Entstehen von etwaigem Abrieb weitgehend vermieden wird.

Gemäß einer anderen Weiterbildung der Erfindung ist vorgesehen, dass das Dichtelement elastisch ausgebildet ist sowie mindestens zwei integral an diesem ausgebildete und mit deren Längserstreckung parallel zur Längsmittenachse ausgerichtete Dome aufweist. Trotz der etwa noppenartig ausgebildeten Dome ist eine zuverlässige Abdichtung zwischen dem Getriebegehäuse und dem Oberteil sichergestellt. Das Dichtelement ist bevorzugt als Flächendichtung ausgebildet und aus einem elastomeren Kunststoff hergestellt.

Außerdem kann mit Vorteil vorgesehen sein, dass die axiale Länge der beiden Dome des Dichtelements derartig ist, dass im montierten Zustand von Oberteil und Unterteil des Gehäuses der Betätigungsvorrichtung das Verdrehsicherungselement mittels dieser mindestens zwei Dome axial gegen den wenigstens einen Haltezapfen des Unterteils des Gehäuses mechanisch vorgespannt ist. Hierdurch wird das Mitbewegen des Verdrehsicherungselements bei insbesondere axialen Verschiebebewegungen der Haltevorrichtung sicher verhindert.

Eine andere technisch vorteilhafte Ausgestaltung der Betätigungsvorrichtung kann derartig sein, dass die mindestens zwei Dome mittels einer Mehrzahl von integral an dem Dichtelement ausgebildeten Stegen mit dem Dichtelement verbunden und positioniert sind. Hierdurch ist eine Reduzierung der Teileanzahl der Betätigungsvorrichtung sowie eine vereinfachte Fertigung und Montage des Dichtelements erreicht.

Um eine leicht drehbare Verbindung zwischen Kolben und Haltevorrichtung zu realisieren, ist bevorzugt vorgesehen, dass die Haltevorrichtung radial innen eine kreisförmige Durchführungsöffnung aufweist, welche wandartig durch eine ringförmige Schulter der Haltevorrichtung begrenzt ist. Der Kolben weist zudem radial innen und kolbenstangenfern einen ringförmigen Kragen auf, welcher sich zur Unterseite eines durch die Durchführungsöffnung gesteckten Schraubbolzens hin erstreckt, ohne diese zu erreichen. In dem dadurch gebildeten ringförmigen Freiraum zwischen der Unterseite des Schraubbolzens und dem Kragen des Kolbens ist die ringförmige Schulter der Haltevorrichtung mit einer nur geringen Klemmkraft angeordnet.

Weiter ist vorgesehen, dass mittels der Sensoranordnung eine Axialposition des Kolbens innerhalb des hohlzylindrischen Aufnahmeraumes berührungslos messbar ist. Bei der genannten Axialposition handelt es sich beispielsweise um eine der beiden Endstellungen sowie um eine Mittenstellung im Betätigungsweg des Kolbens.

Gemäß einer anderen Weiterbildung der Betätigungsvorrichtung ist vorgesehen, dass der magnetfeldsensitive Sensor radial außerhalb der den hohlzylindrischen Aufnahmeraum umgrenzenden Wandung angeordnet ist. Hierdurch ist keine abgedichtete Bohrung in der Wandung zur Aufnahme des magnetfeldsensitiven Sensors notwendig.

Zum besseren Verständnis der Erfindung ist der Beschreibung eine Zeichnung beigefügt. In dieser zeigt
Fig.1 eine geschnittene perspektivische Teilansicht einer erfindungsgemäßen Betätigungsvorrichtung für ein automatisiertes Schaltgetriebe mit einer einen Magneten haltenden Haltevorrichtung als Teil einer Sensoranordnung sowie mit einem Verdrehsicherungselement,
Fig. 2 eine Draufsicht auf ein Unterteil eines Gehäuses der Betätigungsvorrichtung mit einem Dichtelement sowie auf die innerhalb des Aufnahmeraumes des Gehäuses angeordnete Haltevorrichtung und auf das Verdrehsicherungselement gemäß Fig. 1, Fig. 3 einen Längsschnitt entlang der Schnittlinie A-A gemäß Fig. 2,
Fig. 4 eine stark schematisierte, perspektivische Darstellung der Haltevorrichtung und des Verdrehsicherungselements gemäß den Figuren 1 bis 3,
Fig. 5 einen Querschnitt entlang der Schnittlinie V-V gemäß Fig. 4, und
Fig. 6 eine stark schematisierte Darstellung der auf die Haltevorrichtung sowie auf das Verdrehsicherungselement gemäß Fig. 5 wirkenden Kräfte.

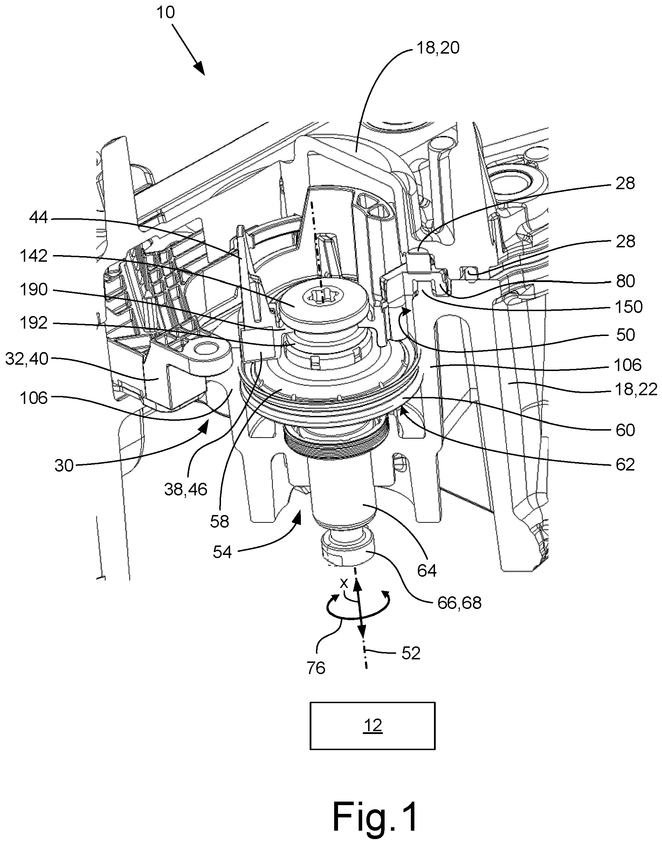

Demnach zeigt die Fig. 1 eine teilweise geschnittene perspektivische Teilansicht einer Betätigungsvorrichtung 10 für ein automatisiertes Schaltgetriebe 12 eines Kraftfahrzeugs mit einer Haltevorrichtung 44 für einen Magneten 38, welcher ein Bauteil einer Sensoranordnung 30 ist. Die Betätigungsvorrichtung 10 weist ein Gehäuse 18 mit einem Unterteil 22, einem deckelartigen Oberteil 20 und einem dazwischen angeordneten Dichtelement 28 zur fluiddichten Abdichtung des mit dem Unterteil 22 und dem Oberteil 20 gebildeten Gehäuses 18 auf.

Die Betätigungsvorrichtung 10 weist wenigstens einen als Kolben-Zylinder-Anordnung ausgebildeten druckmittelbetätigbaren Aktuator 54 auf, mittels dessen Stellglied ein Schalt- oder Wählelement des Schaltgetriebes 12 zum Anwählen einer Schaltgasse beziehungsweise zum Einlegen oder Auslegen eines Getriebegangs betätigbar ist. Dieser Aktuator 54 weist einen hohlzylindrischen Aufnahmeraum 50 im Unterteil 22 des Gehäuses 18 auf, in dem ein Kolben 58 koaxial zur Längsmittenachse 52 des Aufnahmeraumes 50 bewegbar angeordnet ist. Der Kolben 58 ist radial außen mittels einer umlaufenden Kolbendichtung 60 druckdicht gegen eine den Aufnahmeraum 50 umgrenzenden Wandung 106 abgedichtet. Der Kolben 58 ist bevorzugt als ein Blechformteil hergestellt, welches mit einem beispielsweise elastomeren Kunststoffmaterial zur integralen Ausbildung der Kolbendichtung 60 radial außen umspritzt ist.

An der vom Oberteil 20 des Gehäuses 18 wegweisenden Kolbenunterseite 62 ist eine Kolbenstange 64 befestigt, an deren freien Ende 66 eine Schnittstelle 68 zum Schaltgetriebe 12 ausgebildet ist. Mittels der abschnittsweise zylindrischen Kolbenstange 64 ist beispielsweise eine nicht dargestellte Wählstange verbindbar und diese zur Auswahl einer Schaltgasse betätigbar. Die Kolbenstange 64 kann aber auch mit einer Schaltwelle oder Schaltgabel des Schaltgetriebes 12 verbunden sein, wobei letztere zum Verschieben einer einem nicht dargestellten Getriebezahnrad zugeordneten Schaltmuffe entlang einer Getriebewelle dient. Durch das Betätigen der Schaltmuffe lässt sich ein Gangwechsel des automatisierten Schaltgetriebes initiieren, wie es dem Fachmann aus der DE 10 2016 012 862 A1 bekannt ist.

Zur Ermittlung der aktuellen Betätigungsposition des Kolbens 58 ist die bereits erwähnte Sensoranordnung 30 vorhanden, welche unter anderem einen magnetfeldsensitiven Sensor 32 und einen mit diesem in einer berührungslosen Wirkverbindung stehenden Magneten 38 aufweist. Der magnetfeldsensitive Sensor 32 ist hier beispielsweise ein Hall-Sensor 40, der mittels nicht dargestellter Verbindungsleitungen mit einer gleichfalls nicht dargestellten elektronischen Auswerteelektronik beziehungsweise mit einem Steuergerät verbunden ist. Der Magnet 38 ist baulich in die bereits erwähnte Haltevorrichtung 44 integriert, welche in diesem Ausführungsbeispiel die Umfangsgeometrie eines Hohlzylindersegments aufweist. Sie kann aber auch die Geometrie eines vollständigen Hohlzylinders aufweisen. Die Haltevorrichtung 44 ist vorzugsweise aus einem Kunststoffmaterial hergestellt. Der Magnet 38 ist bevorzugt ein kreissegmentförmiger Permanentmagnet 46, welcher in das Kunststoffmaterial der Haltevorrichtung 44 einstückig eingebettet ist.

Mittels der Sensoranordnung 30 lässt sich die Axialposition X des Kolbens 58 entlang der Längsmittenachse 52 des Aufnahmeraums 50 und damit ein aktueller Schaltgassen-Wählzustand oder ein Schaltzustand des Schaltgetriebes 12 präzise bestimmen. Der magnetfeldsensitive Sensor 32 ist hier beispielhaft radial gegenüberliegend zu dem Magneten 38 positioniert, wobei der magnetfeldsensitive Sensor 32 radial außerhalb einer umlaufenden Wandung 106 des hohlzylindrischen Aufnahmeraumes 50 angeordnet ist.

Um ordnungsgemäße Messungen zu gewährleisten, kommt es auf eine dauerhaft präzise Ausrichtung des magnetfeldsensitiven Sensors 32 in Bezug zu dem in der Haltevorrichtung 44 integrierten Magneten 38 an. Insbesondere beim Einlegen eines Getriebeganges neigen die Kolbenstange 64 samt Kolben 58 und der dort befestigte Haltevorrichtung 44 gemeinsam zu Drehbewegungen um die Längsmittenachse 52, welches mittels des kreisförmigen ersten Doppelpfeils 76 in Fig. 1 angedeutet ist. Diese Drehbewegungen führen zur Beeinträchtigung der Messgenauigkeit der Sensoranordnung 30. Um diesen unerwünschten Effekt zu verhindern, ist erfindungsgemäß ein vergleichsweise kleines Verdrehsicherungselement 80 vorhanden, welches mit der Haltevorrichtung 44 derartig zusammenwirkt, dass eine koaxiale Bewegung des Zusammenbauteils bestehend aus der Kolbenstange 64, dem Kolben 58 und der Haltevorrichtung 44 zwar unbehindert möglich ist, eine Rotationsbewegung der den Magneten 38 tragenden Haltevorrichtung 44 jedoch reibungsarm verhindert wird.

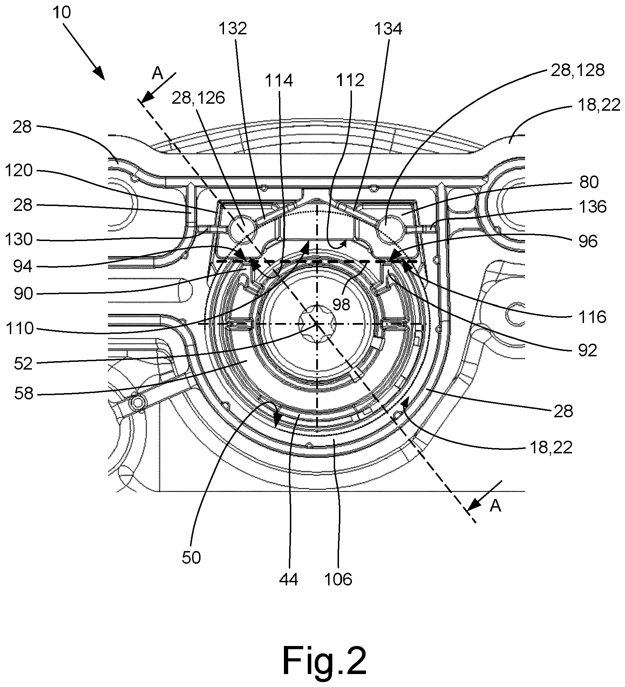

Die Fig. 2 zeigt eine axiale Draufsicht auf das Unterteil 22 des Gehäuses 18 der Betätigungsvorrichtung 10 mit dem zwischen dem Oberteil 20 und dem Unterteil 22 des Gehäuses 18 angeordneten Dichtelement 28, den Aufnahmeraum 50 des Gehäuses 18, den dort angeordneten Kolben 58, die an diesem kolbenstangenfern drehbeweglich befestigte Haltevorrichtung 44 und das mit der Haltevorrichtung 44 zusammenwirkende Verdrehsicherungselement 80.

Auf dem Unterteil 22 des Gehäuses 18 der Betätigungsvorrichtung 10 liegt deutlich erkennbar das elastomere Dichtelement 28 auf. Die Haltevorrichtung 44 ist mit der kolbenstangenfernen Oberseite des Kolbens 58 um die Längsmittenachse 52 des Aufnahmeraums 50 drehbeweglich verbunden und zumindest abschnittweise in dem Aufnahmeraum 50 angeordnet, welcher von der hohlzylindrischen Wandung 106 des Unterteils 22 umgrenzt ist. Die Haltevorrichtung 44 weist eine erste axiale Längsrippe 90 und eine zweite axiale Längsrippe 92 auf, welche jeweils eine in Richtung zum Verdrehsicherungselement 80 weisende plane Anlagefläche 94, 96 haben. Die beiden Anlageflächen 94, 96 verlaufen dabei geometrisch entlang einer gedachten Sekantenlinie 98 an der Haltevorrichtung 44. Diese Sekantenlinie 98 begrenzt den unvollständigen Zylindersegmentabschnitt der Haltevorrichtung 44 geometrisch.

Das Verdrehsicherungselement 80 weist eine nur beispielhaft trapezförmige Geometrie auf, wobei eine in Richtung zur Haltevorrichtung 44 weisende Grundseite 110 des Verdrehsicherungselements 80 eine axial, das heißt senkrecht zur Zeichenebene orientierte radiale Vertiefung 112 aufweist, neben der jeweils eine radial einwärts gerichtete erste Kontaktfläche 114 sowie eine radial einwärts gerichtete zweite Kontaktfläche 116 ausgebildet sind. Das trapezförmige Verdrehsicherungselement 80 ist hierbei in einer nischenartigen und geometrisch komplementär zum Verdrehsicherungselement 80 ausgebildeten beziehungsweise angenähert trapezförmigen Aussparung 120 in der Wandung 106 des Unterteils 22 des Gehäuses 18 angeordnet.

Das Verdrehsicherungselement 80 kann zumindest bereichsweise formschlüssig oder geringfügig spielbehaftet in der Aussparung 120 angeordnet sein. Im Fall einer geringfügig spielbehafteten Ausbildung ergibt sich ein verminderter Fertigungsaufwand, da eine spanende Bearbeitung der genannten Bauteile entfallen kann.

Die beiden Kontaktflächen 114, 116 des Verdrehsicherungselements 80 sind bevorzugt zumindest geringfügig spielbehaftet in Bezug zu den Anlageflächen 94, 96 der beiden Längsrippen 90, 92 angeordnet. Infolgedessen werden Klemmeffekte zwischen der sich koaxial zu der Längsmittenachse 52 bewegenden Haltevorrichtung 44 und dem Verdrehsicherungselement 80 vermieden.

Die Haltevorrichtung 44 und das Verdrehsicherungselement 80 sind bevorzugt aus demselben Werkstoff hergestellt, bei dem es sich beispielsweise um ein Kunststoffmaterial handeln kann. Hierdurch wird ein Werkstoffabrieb im Betrieb der Betätigungsvorrichtung weitgehend vermieden.

Das Dichtelement 28 ist elastisch ausgebildet und kann beispielsweise aus einem elastomeren Kunststoffmaterial gefertigt sein. Das Dichtelement 28 weist hier lediglich exemplarisch zwei integral an diesem ausgebildete sowie axial ausgerichtete, das heißt senkrecht zur Zeichenebene orientierte zapfenartige Dome 126, 128 auf. Das Verdrehsicherungselement 80 ist im vollständig montierten Zustand zwischen dem Oberteil 20 und dem Unterteil 22 des Gehäuses 18 der Betätigungsvorrichtung 10 mittels der beiden Dome 126, 128 axial eingespannt. Dies ist insbesondere dann von Bedeutung, wenn das Verdrehsicherungselement 80 spielbehaftet in der trapezförmigen Aussparung 120 aufgenommen ist. Die mindestens zwei Dome 126, 128 sind mithilfe einer Mehrzahl von integral an dem Dichtelement 28 ausgebildeten Stegen 130, 132, 134, 136 einstückig mit dem Dichtelement 28 verbunden und hierdurch präzise ausgerichtet.

Aufgrund des an der Sekantenlinie 98 der Haltevorrichtung 44 bereichsweise anliegenden Verdrehsicherungselements 80 ist jede Eigenrotation der Haltevorrichtung 44 ausgeschlossen. Da die Haltevorrichtung 44 drehbar mit dem Kolben 58 verbunden ist, kann sich der Kolben 58 während einer zum Einlegen eines Getriebeganges notwendigen Axialbewegung dennoch getriebebedingt um seine Längsachse beziehungsweise um die Längsmittenachse 52 drehen. Demnach bleibt die hier gezeigte Umfangsorientierung der Haltevorrichtung 44 in Bezug zu dem Sensor 32 unter allen Betriebsbedingungen der Betätigungsvorrichtung 10 unverändert, in dessen Folge mittels der Sensoranordnung 30 eine präzise Bestimmung der Axialposition X des Kolbens 58 der Betätigungsvorrichtung 10 durchführbar ist.

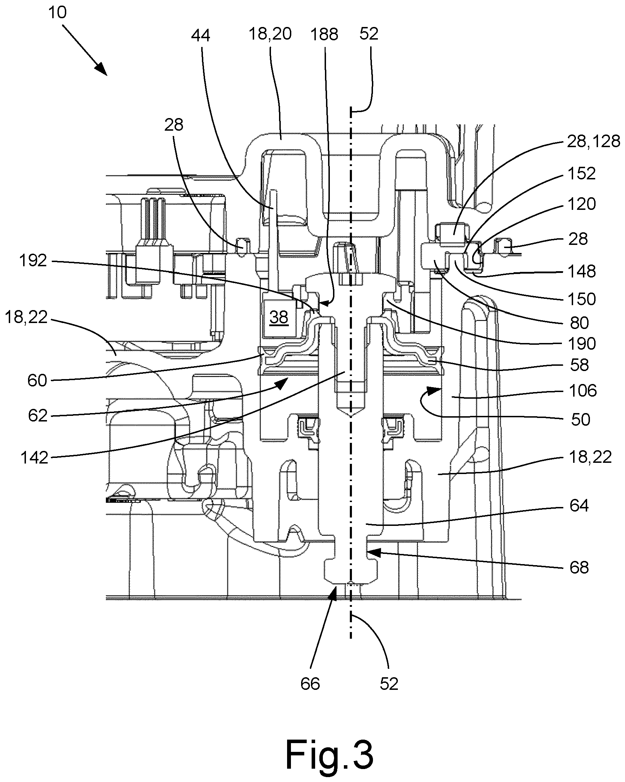

Die Fig. 3 zeigt einen Längsschnitt entlang der Schnittlinie A-A gemäß Fig. 2. Hierdurch ist der von der Wandung 106 des Unterteils 22 des Gehäuses 18 umgrenzte Aufnahmeraum 50 des Unterteils 22 des Gehäuses 18 der Betätigungsvorrichtung 10 gut erkennbar. Der Kolben 58 ist in diesem Aufnahmeraum 50 koaxial zur Längsmittenachse 52 verschiebbar aufgenommen und mittels der hier beispielhaft als Doppellippendichtung ausgebildeten Kolbendichtung 60 abgedichtet geführt. Die Abdichtung zwischen dem Unterteil 22 und dem Oberteil 20 des Gehäuses 18 erfolgt wie schon erläutert mittels des Dichtelements 28.

Die näherungsweise hohlzylindrische beziehungsweise hohlzylinder-segmentförmige Haltevorrichtung 44 mit dem daran integrierten Magneten 38 ist zumindest abschnittweise in dem Aufnahmeraum 50 des Unterteils 22 des Gehäuses 18 angeordnet und um die Längsmittenachse 52 drehbar mit der kolbenstangenfernen Seite des Kolbens 58 verbunden. Der Kolben 58 ist mittels eines Schraubbolzens 142 mit der Kolbenstange 64 fest verbunden. Die Kolbenstange 64 weist an ihrem von der Kolbenunterseite 62 weggerichteten freien Ende 66 die hier gut erkennbare Schnittstelle 68 für ein Betätigungselement des nicht dargestellten Schaltgetriebes 12 auf. Dieses Betätigungselement ist beispielsweise eine Schaltstange zum Ein- und Auslegen von Getriebegängen.

Die Haltevorrichtung 44 weist radial innen eine kreisförmige Durchführungsöffnung 188 auf, welche wandartig durch eine ringförmige Schulter 190 der Haltevorrichtung 44 begrenzt ist. Die Schulter 190 der Haltevorrichtung 44 ist mit einer nur vergleichsweise geringen Klemmkraft in einem Ringraum zwischen der Unterseite des Schraubbolzens 142 und einem ringförmigen Kragen 192 des Kolbens 58 angeordnet. Der Kragen 192 des Kolbens 58 ist radial innen am Kolben 58 ausgebildet und erstreckt sich nach axial außen in Richtung zur Unterseite des Schaubbolzens 142, ohne diese zu erreichen. Der Kragen 192 besteht beispielsweise aus einem an den Metallbereich des Kolbens 58 angespritzten Elastomer.

Die Klemmkraft, mit welcher die Haltevorrichtung 44 an dem Kolben 58 gehalten wird, ist einerseits so groß eingestellt, dass die Haltevorrichtung 44 bei einer Axialbewegung des Kolbens 58 von diesem spielfrei mitgenommen wird, und andererseits so klein, dass die Haltevorrichtung 44 bei einer Drehbewegung des Kolbens 58 schadlos von dem Verdrehsicherungselement 80 festgehalten wird, also an einem Mitdrehen sehr reibungsarm gehindert wird.

Der Aufnahmeraum 50 des Gehäuses 18 ist auch hier gut erkennbar durch die umlaufenden, im Wesentlichen hohlzylindrischen Wandung 106 radial begrenzt. Die Wandung 106 weist im Bereich einer axial außen beziehungsweise oben vorhandenen Bodenfläche 148 der genannten Aussparung 120 wenigstens einen radial auswärts versetzt ausgebildeten sowie axial in Richtung zum Oberteil 20 weisenden zylindrischen Haltezapfen 150 auf. Das Verdrehsicherungselement 80 ist auf diesem Haltezapfen 150 mittels einer unterseitig an dem Verdrehsicherungselement 80 ausgebildeten und zugeordneten topfförmigen Tasche 152 aufgenommen sowie unter anderem hierdurch lagegesichert.

In dem in Fig. 3 dargestellten, vollständig montierten Zustand von Oberteil 20 und Unterteil 22 des Gehäuses 18 der Betätigungsvorrichtung 10 ist das Verdrehsicherungselement 80 mittels der mindestens zwei Dome 126, 128, von denen in Fig. 3 lediglich ein Dom 128 sichtbar ist, axial gegen den Haltezapfen 150 vorgespannt. Infolgedessen ergibt sich für den Fall, dass das Verdrehsicherungselement 80 spielbehaftet in der Aussparung 120 des Unterteils 22 aufgenommen ist, eine zuverlässige Lagesicherung für dasselbe in Bezug zu den Axialbewegungen des aus dem Kolben 58, der Kolbenstange 64 und der Haltevorrichtung 44 gebildeten Zusammenbauteils innerhalb des Aufnahmeraumes 50 koaxial zur Längsmittenachse 52. Daher sind Klemm- und/oder Kippeffekte insbesondere zwischen dem Verdrehsicherungselement 80 und der Haltevorrichtung 44 für den Magneten 38 ausgeschlossen.

Für den Fall, dass zwischen dem Verdrehsicherungselement 80 und der Aussparung 120 des Unterteils 22 des Gehäuses 18 der Betätigungsvorrichtung 10 zumindest bereichsweise ein Formschluss besteht (hier nicht dargestellt), ist eine axiale Verspannung zwischen dem Haltezapfen 150 des Unterteils 22 und dem Oberteil 20 des Gehäuses 18 mit Hilfe der Dome 126, 128 des Dichtelements 28 nicht zwingend erforderlich.

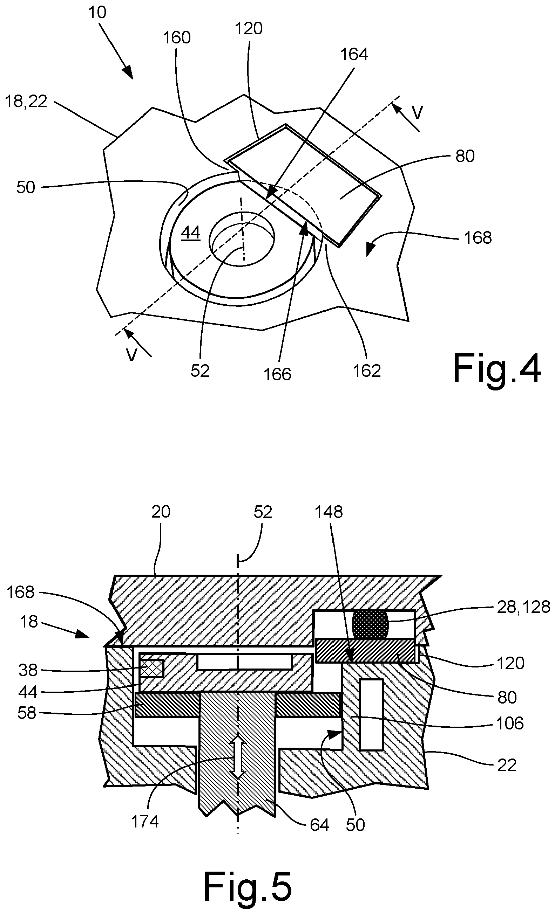

Die Fig. 4 zeigt eine stark schematisierte, perspektivische Darstellung der Haltevorrichtung 44 und des Verdrehsicherungselements 80 gemäß den Figuren 1 bis 3. Erkennbar ist auch hier, dass die Haltevorrichtung 44 mit dem in Fig. 4 nicht sichtbaren Magneten 38 in dem Aufnahmeraum 50 des Unterteils 22 des Gehäuses 18 der Betätigungsvorrichtung 10 aufgenommen sowie koaxial zur Längsmittenachse 52 verschiebbar ist. Die beiden Anlageflächen 94, 96 der Haltevorrichtung 44, welche mit den beiden Kontaktflächen 114, 116 des Verdrehsicherungselements 80 zur Verdrehsicherung der Haltevorrichtung 44 spielbehaftet aneinander liegen, sind hier aus Gründen der besseren zeichnerischen Übersicht jeweils vereinfacht als parallel zueinander verlaufende Planflächen 164, 166 dargestellt. Das trapezförmige Verdrehsicherungselement 80 liegt hier beispielhaft nur bereichsweise formschlüssig in einer gleichfalls trapezförmigen Aussparung 120 im Unterteil 22 des Gehäuses 18 der Betätigungsvorrichtung 10. Außerdem weist die Aussparung 120 in der Wandung 106 des Unterteils 22 des Gehäuses 18 hier beispielhaft zwei einander zugerichtete Vorsprünge 160, 162 auf, welche die in Richtung zu der Haltevorrichtung 44 orientierte Planfläche 166 des Verdrehsicherungselement 80 seitlich übergreifen. Infolgedessen kann sich das Verdrehsicherungselement 80 nicht parallel zur Oberseite 168 des Unterteils 22 des Gehäuses 18 verschieben, vielmehr ist es weitgehend formschlüssig in der genannten Aussparung 120 aufgenommen.

Die Fig. 5 veranschaulicht einen vereinfacht dargestellten Querschnitt entlang der Schnittlinie V-V gemäß Fig. 4. Die Haltevorrichtung 44 mit dem Magneten 38 ist in dem Aufnahmeraum 50 des Unterteils 22 des Gehäuses 18 axial zur Längsmittenachse 52 beziehungsweise koaxial zur Richtung des zweiten Doppelpfeils 174 aufgenommen. Die Aufnahmeraum 50 ist mittels des Oberteils 20 des Gehäuses 18 verschlossen. In der Aussparung 120 des Unterteils 22 des Gehäuses 18 ist das Verdrehsicherungselement 80 hier spielbehaftet aufgenommen und kann sich somit zumindest geringfügig parallel zur Oberseite 168 des Unterteils 22 des Gehäuses 18 verschieben. Um diese parallele Verschiebbarkeit zu verhindern, ist das Verdrehsicherungselement 80 mithilfe des hier nur einen sichtbaren zapfenförmigen Domes 128 als Bestandteil des Dichtelements 28 zwischen dem Oberteil 20 und der Bodenfläche 148 der Aussparung 120 im Unterteil 22 des Gehäuses 18 axial eingespannt. Hierdurch ist eine zuverlässige Lagesicherung des Verdrehsicherungselements 80 in der Aussparung 120 auch bei Axialbewegungen der Haltevorrichtung 44 innerhalb des Aufnahmeraumes 50 sichergestellt.

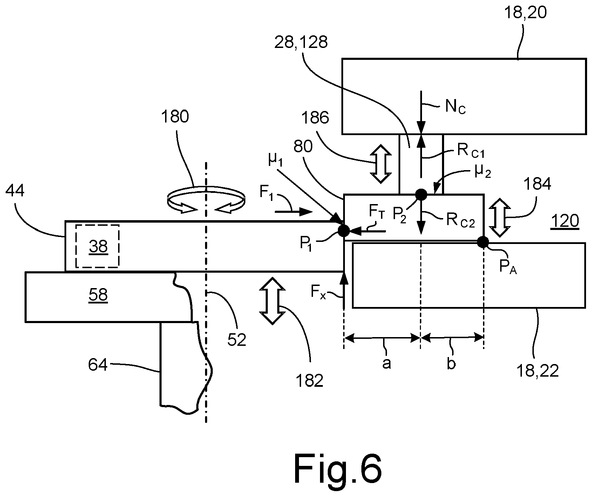

Fig. 6 zeigt eine stark schematisierte Darstellung der auf die Haltevorrichtung 44 sowie das Verdrehsicherungselement 80 gemäß Fig. 5 einwirkenden Kräfte. Das hier spielbehaftet angeordnet Verdrehsicherungselement 80 ist erkennbar zwischen dem Oberteil 20 und dem Unterteil 22 des Gehäuses 18 angeordnet sowie mittels des nur einen sichtbaren Domes 128 des Dichtelements 28 axial eingespannt. Die Haltevorrichtung 44 mit dem daran angeordneten beziehungsweise vollständig mit Kunststoff umspritzten Magneten 38 ist bestrebt, sich zusammen mit dem Kolben 58 und der Kolbenstange 64 entgegen der Wirkung des Verdrehsicherungselements 80 um die Längsmittenachse 52 gemäß dem Rotationspfeil 180 zu drehen. Außerdem vollzieht die Haltevorrichtung 44, wie dies mit dem dritten Doppelpfeil 182 angedeutet ist, axiale Bewegungen koaxial zur Längsmittenachse 52. Zwischen der Haltevorrichtung 44 und dem Verdrehsicherungselement 80 besteht vereinfacht dargelegt ein erster Berührpunkt P₁, in dessen Bereich die erste Gleitreibung µ₁ herrscht. Außerdem besteht zwischen dem Dom 128 und dem Verdrehsicherungselement 80 vereinfacht dargelegt ein zweiter Berührpunkt P₂, wobei in diesem Bereich zwischen dem Dom 128 und dem Verdrehsicherungselement 80 eine zweite Gleitreibung µ₂ herrscht. Schließlich existiert zwischen dem Verdrehsicherungselement 80 und dem Unterteil 22 des Gehäuses 18 vereinfacht dargelegt ein Auflagerpunkt P_{A}, um den das Verdrehsicherungselement 80 kippen könnte. Aufgrund der Axialbewegung der Haltevorrichtung 44 ist das Verdrehsicherungselement 80 bestrebt, sich in Richtung eines vierten Doppelpfeils 184 nach oben oder nach unten zu bewegen, welches zu einer Kompressionsbewegung des elastischen Doms 128 in Richtung des fünften Doppelpfeils 186 führt.

Die Haltevorrichtung 44 wirkt bei einem Kontakt mit dem Verdrehsicherungselement 80 mit einer senkrecht zur Längsmittenachse 52 orientierten Horizontalkraft F₁ auf das Verdrehsicherungselement 80 ein, wodurch im ersten Berührpunkt P₁ eine entgegengesetzte und gleichgroße Gegenkraft F_{T} wirkt. Das Oberteil 20 des Gehäuses 18 drückt mit einer parallel zur Längsmittenachse 52 wirkenden Normalkraft N_{C} auf den Dom 128 des Dichtelements 28, welches dort eine gleich große und entgegengesetzt gerichtete normale Reaktionskraft R_{C1} hervorruft. Über den Dom 128 des Dichtelements 28 wird hierdurch eine Druckkraft R_{C2} vermittelt, welche im Punkt P₂ senkrecht auf das Verdrehsicherungselement 80 einwirkt und die hinsichtlich ihres Betrages gleich der Normalkraft N_{C} ist.

Eine aufgrund der aufwärts und abwärts gerichteten Axialbewegungen der Haltevorrichtung 44 entstehende und unerwünschte Kippkraft Fₓ ergibt sich zu Fₓ = F₁ * µ₁, welche also proportional zu der Größe der Horizontalkraft F₁ und der Gleitreibung µ₁ zwischen der Haltevorrichtung 44 und dem Verdrehsicherungselement 80 ist.

Zwischen dem ersten Berührpunkt P₁ und dem zweiten Berührpunkt P₂ besteht eine erste Hebellänge a, und zwischen dem zweiten Berührpunkt P₂ und Auflagerpunkt P_{A} erstreckt sich eine zweite Hebellänge b. Um eine zuverlässige Lagesicherung auch eines spielbehaftet in der Aussparung 120 des Unterteils 22 des Gehäuses 18 aufgenommenen Verdrehsicherungselements 80 trotz der Axialbewegungen der Haltevorrichtung 44 sicherzustellen, muss die Ungleichung Fₓ * (a + b) < R_{C2}* b erfüllt sein. Dies bedeutet, dass ein Drehmoment gebildet aus dem Produkt der Kippkraft Fₓ und der Summe der beiden Hebellängen a + b stets kleiner sein muss als das Drehmoment aus dem Produkt der Druckkraft R_{C2} beziehungsweise der Normalkraft N_{C} mit der zweiten Hebellänge b. Demnach muss die von Dom 128, vom Oberteil 20 sowie vom Unterteil 22 des Gehäuses 18 aufgebaute und auf das Verdrehsicherungselement 80 einwirkende Druckkraft R_{C2} immer größer sein als die Kippkraft Fₓ.

Die Einhaltung der Ungleichung kann im Wesentlichen durch eine entsprechende Werkstoffauswahl zur Einstellung der beiden Gleitreibungen µ₁, µ₂, durch die Wahl eines elastomeren Kunststoffs mit einer geeigneten Elastizität für den wenigstens einen Dom 128 sowie durch entsprechendes axiales mechanisches Einspannen oder Vorspannen des Doms 128 gewährleistet werden.

### Bezugszeichenliste (Bestandteil der Beschreibung)

- 10: Betätigungsvorrichtung für ein automatisiertes Schaltgetriebe
- 12: Automatisiertes Schaltgetriebe
- 18: Gehäuse der Betätigungsvorrichtung
- 20: Oberteil des Gehäuses
- 22: Unterteil des Gehäuses
- 28: Dichtelement
- 30: Sensoranordnung
- 32: Magnetfeldsensitiver Sensor
- 38: Magnet
- 40: Hall-Sensor
- 44: Haltevorrichtung für den Magnet
- 46: Permanentmagnet
- 50: Aufnahmeraum im Unterteil des Gehäuses
- 52: Längsmittenachse
- 54: Aktuator
- 58: Kolben
- 60: Kolbendichtung
- 62: Kolbenunterseite
- 64: Kolbenstange
- 66: Freies Ende der Kolbenstange
- 68: Schnittstelle
- 76: Erster Doppelpfeil
- 80: Verdrehsicherungselement
- 90: Erste axiale Längsrippe der Haltevorrichtung
- 92: Zweite axiale Längsrippe der Haltevorrichtung
- 94: Erste Anlagefläche der Haltevorrichtung
- 96: Zweite Anlagefläche der Haltevorrichtung
- 98: Sekantenlinie der Haltevorrichtung
- 106: Wandung des Aufnahmeraumes
- 110: Grundseite des Verdrehsicherungselements
- 112: Vertiefung im Verdrehsicherungselement
- 114: Erste Kontaktfläche des Verdrehsicherungselements
- 116: Zweite Kontaktfläche des Verdrehsicherungselements
- 120: Aussparung im Unterteils des Gehäuses
- 126: Erster Dom
- 128: Zweiter Dom
- 130: Erster Steg
- 132: Zweiter Steg
- 134: Dritter Steg
- 136: Vierter Steg
- 142: Schraubbolzen
- 148: Bodenfläche der Aussparung
- 150: Haltezapfen
- 152: Tasche im Verdrehsicherungselement
- 160: Erster Vorsprung
- 162: Zweiter Vorsprung
- 164: Planfläche der Haltevorrichtung
- 166: Planfläche des Verdrehsicherungselements
- 168: Oberseite des Unterteils des Gehäuses
- 174: Zweiter Doppelpfeil
- 180: Rotationspfeil
- 182: Dritter Doppelpfeil
- 184: Vierter Doppelpfeil
- 186: Fünfter Doppelpfeil
- 188: Durchführungsöffnung der Haltevorrichtung
- 190: Ringförmige Schulter der Haltevorrichtung
- 192: Ringförmiger Kragen des Kolbens
- a: Erste Hebelänge
- b: Zweite Hebellänge
- N_{C}: Normalkraft
- R_{C1}: Reaktionskraft (Normalkraft)
- R_{C2}: Druckkraft
- F₁: Horizontalkraft
- F_{T}: Gegenkraft
- F_{X}: Kippkraft
- P₁: Erster Berührpunkt
- P₂: Zweiter Berührpunkt
- P_{A}: Auflagerpunkt
- µ₁: Erste Gleitreibung
- µ₂: Zweite Gleitreibung
- X: Axialposition des Kolbens

## Patentansprüche

1. Betätigungsvorrichtung (10) für ein automatisiertes Schaltgetriebe (12) eines Kraftfahrzeugs, mittels der ein Wähl- oder Schaltelement des Schaltgetriebes zur Einstellung einer Schaltgasse oder zum Einlegen beziehungsweise Auslegen eines Getriebegangs bewegbar ist, wobei die Betätigungsvorrichtung (10) ein Gehäuse (18) und einen druckmittelbetriebenen Aktuator (54) mit einem Kolben (58) und einer mit dem Wähl- oder Schaltelement des Schaltgetriebes verbindbare Kolbenstange (64) aufweist, wobei der Kolben (58) in einem zylindrischen Aufnahmeraum (50) des Gehäuses (18) der Betätigungsvorrichtung (10) radial abgedichtet angeordnet und dort koaxial bewegbar ist, wobei eine Sensoranordnung (30) mit einem Magneten (38) und einem magnetfeldsensitiven Sensor (32) vorhanden ist, und wobei der Magnet (38) mittels einer Haltevorrichtung (44) kolbenstangenfern stirnseitig am Kolben (58) sowie der Sensor (32) gehäuseseitig radial gegenüber dem Magneten (38) angeordnet sind, **dadurch gekennzeichnet, dass** die Haltevorrichtung (44) um die Längsmittenachse (52) des Aufnahmeraumes (50) drehbar mit dem Kolben (58) verbunden ist, dass die Haltevorrichtung (44) eine hohlzylindrische oder hohlzylindersegmentförmige Geometrie aufweist, dass ein stabförmiges oder plattenförmiges Verdrehsicherungselement (80) vorhanden ist, welches zumindest mit seinen beiden Enden in einer zugeordneten Aussparung (120) im Gehäuse (18) formschlüssig aufgenommen ist, und dass das Verdrehsicherungselement (80) die hohlzylindrische oder hohlzylindersegmentförmige Haltevorrichtung (44) mit Abstand zu dem Magneten (38) mit geringem Spiel sekantenartig durchgreift, wodurch eine Axialbewegung und eine Drehbewegung des Kolbens (58) zwar möglich sind, eine Drehbewegung der Haltevorrichtung (44) um die Längsmittenachse (52) des Aufnahmeraumes (50) jedoch verhindert wird.

2. Betätigungsvorrichtung nach Anspruch 1, **dadurch gekennzeichnet, dass** die Haltevorrichtung (44) zwei axial ausgerichtete Längsrippen (90, 92) aufweist, dass die Längsrippen (90, 92) jeweils eine in Richtung des Verdrehsicherungselements (80) weisende plane Anlagefläche (94, 96) aufweisen, und dass die Anlageflächen (94, 96) zueinander beabstandet entlang einer gedachten Sekantenlinie (98) der Haltevorrichtung (44) angeordnet sind.

3. Betätigungsvorrichtung nach Anspruch 1 oder 2, **dadurch gekennzeichnet, dass** das Gehäuse (18) aus einem Unterteil (22) und einem Oberteil (20) besteht, welche mittels eines Dichtelements (28) gegeneinander abgedichtet sind.

4. Betätigungsvorrichtung nach Anspruch 3, **dadurch gekennzeichnet, dass** eine den Aufnahmeraum (50) umgrenzende Wandung (106) des Unterteils (22) des Gehäuses (18) wenigstens einen radial auswärts versetzt angeordneten sowie axial in Richtung zum Oberteil (20) des Gehäuses (18) gerichteten Haltezapfen (150) aufweist, dass das Verdrehsicherungselement (80) an seiner dem Unterteil (22) des Gehäuses (18) zugewandten Seite wenigstens eine Tasche (152) aufweist, und dass ein jeder Haltezapfen (150) in einer jeweils zugeordneten Tasche (152) aufgenommen ist sowie stirnseitig am Boden der Tasche (152) anliegt.

5. Betätigungsvorrichtung nach einem der Ansprüche 1 bis 4, **dadurch gekennzeichnet, dass** das Verdrehsicherungselement (80) eine trapezförmige Geometrie aufweist.

6. Betätigungsvorrichtung nach Anspruch 5, **dadurch gekennzeichnet, dass** eine zur Haltevorrichtung (44) weisende Grundseite (110) des Verdrehsicherungselements (80) eine axial ausgerichtete radiale Vertiefung (112) aufweist, und dass beidseitig neben dieser Vertiefung (112) jeweils eine radial einwärts gerichtete Kontaktfläche (114, 116) an dem Verdrehsicherungselement (80) ausgebildet ist.

7. Betätigungsvorrichtung nach Anspruch 5 oder Anspruch 6 mit Anspruch 4, **dadurch gekennzeichnet, dass** das Verdrehsicherungselement (80) innerhalb einer nischenartigen sowie angenähert trapezförmigen Aussparung (120) in der Wandung (106) des hohlzylindrischen Aufnahmeraums (50) formschlüssig angeordnet ist.

8. Betätigungsvorrichtung nach Anspruch 6 oder nach Anspruch 7 mit Anspruch 6, **dadurch gekennzeichnet, dass** die Kontaktflächen (114, 116) des Verdrehsicherungselements (80) zumindest geringfügig spielbehaftet und jeweils parallel in Bezug zu den Anlageflächen (94,96) der Längsrippen (90, 92) der Haltevorrichtung (44) positioniert sind.

9. Betätigungsvorrichtung nach einem der Ansprüche 5 bis 8, **dadurch gekennzeichnet, dass** die Haltevorrichtung (44) und das Verdrehsicherungselement (80) aus demselben Werkstoff bestehen.

10. Betätigungsvorrichtung nach Anspruch 3 oder Anspruch 4 oder nach einem der Ansprüche 5 bis 9 mit Anspruch 3, **dadurch gekennzeichnet, dass** das Dichtelement (28) elastisch ausgebildet ist sowie mindestens zwei integral an diesem ausgebildete und mit deren Längserstreckung parallel zur Längsmittenachse (52) ausgerichtete Dome (126, 128) aufweist.

11. Betätigungsvorrichtung nach Anspruch 10, **dadurch gekennzeichnet, dass** die axiale Länge der beiden Dome (126, 128) des Dichtelements (28) derartig ist, dass im montierten Zustand von Oberteil (20) und Unterteil (22) des Gehäuses (18) der Betätigungsvorrichtung (10) das Verdrehsicherungselement (80) mittels der mindestens zwei Dome (126, 128) axial gegen den wenigstens einen Haltezapfen (150) des Unterteils (22) des Gehäuses (18) mechanisch vorgespannt ist.

12. Betätigungsvorrichtung nach Anspruch 10 oder 11, **dadurch gekennzeichnet, dass** die mindestens zwei Dome (126, 128) mittels einer Mehrzahl von integral an dem Dichtelement (28) ausgebildeten Stegen (130, 132, 134, 136) mit dem Dichtelement (28) verbunden und positioniert sind.

13. Betätigungsvorrichtung nach einem der vorherigen Ansprüche, **dadurch gekennzeichnet, dass** die Haltevorrichtung (44) radial innen eine kreisförmige Durchführungsöffnung (188) aufweist, welche wandartig durch eine ringförmige Schulter (190) der Haltevorrichtung (44) begrenzt ist.

14. Betätigungsvorrichtung nach Anspruch 13, **dadurch gekennzeichnet, dass** der Kolben (58) radial innen und kolbenstangenfern einen ringförmigen Kragen (192) aufweist, welcher sich zur Unterseite eines durch die Durchgangsöffnung (188) gesteckten Schraubbolzens (142) hin erstreckt, ohne diese zu erreichen, und dass die ringförmige Schulter (190) der Haltevorrichtung (44) zwischen der Unterseite des Schraubbolzens (142) und dem Kragen (192) des Kolbens (58) angeordnet ist.

15. Betätigungsvorrichtung nach einem vorherigen Ansprüche, **dadurch gekennzeichnet, dass** die Sensoranordnung (30) so ausgestaltet ist, dass eine Axialposition (X) des Kolbens (58) innerhalb des hohlzylindrischen Aufnahmeraumes (50) berührungslos messbar ist.

16. Betätigungsvorrichtung nach Anspruch 4 oder nach einem der Ansprüche 5 bis 15 mit Anspruch 4, **dadurch gekennzeichnet, dass** der magnetfeldsensitive Sensor (32) radial außerhalb der den hohlzylindrischen Aufnahmeraum (50) umgrenzenden Wandung (106) angeordnet ist.

## Claims

1. Operating device (10) for an automated transmission (12) of a motor vehicle, by means of which a selection element or switching element of the transmission can be moved for setting a shift gate or for engaging or disengaging a transmission gear, the operating device (10) comprising a housing (18) and a pressure-medium-operated actuator (54) having a piston (58) and a piston rod (64) which can be connected to the selection element or switching element of the transmission, the piston (58) being arranged in a cylindrical receiving space (50) of the housing (18) of the operating device (10) in a radially sealed manner and being coaxially movable there, a sensor assembly (30) having a magnet (38) and a magnetic-field-sensitive sensor (32) being present, and the magnet (38) being arranged, by means of a retaining device (44), on an end face of the piston (58) remote from the piston rod, and the sensor (32) being arranged radially opposite the magnet (38) on the housing, **characterized in that** the retaining device (44) is connected to the piston (58) so as to be rotatable about the longitudinal central axis (52) of the receiving space (50), **in that** the retaining device (44) comprises a hollow cylindrical or hollow cylinder segment-shaped geometry, **in that** a rod-shaped or plate-shaped anti-rotation element (80) is present, which is received in a form-fitting manner at least with its two ends in an associated recess (120) in the housing (18), **and in that** the anti-rotation element (80) passes in a secant-like manner through the hollow cylindrical or hollow cylinder segment-shaped retaining device (44) at a distance from the magnet (38) with little play, as a result of which an axial movement and a rotational movement of the piston (58) are possible, but a rotational movement of the retaining device (44) about the longitudinal central axis (52) of the receiving space (50) is prevented.

2. Operating device according to claim 1, **characterized in that** the retaining device (44) comprises two axially aligned longitudinal ribs (90, 92), **in that** the longitudinal ribs (90, 92) each comprise a planar contact surface (94, 96) pointing in the direction of the anti-rotation element (80), **and in that** the contact surfaces (94, 96) are arranged at a distance from one another along an imaginary secant line (98) of the retaining device (44).

3. Operating device according to either claim 1 or claim 2,
**characterized in that** the housing (18) consists of a lower part (22) and an upper part (20) which are sealed against one another by means of a sealing element (28).

4. Operating device according to claim 3, **characterized in that** a wall (106) of the lower part (22) of the housing (18), which surrounds the receiving space (50), comprises at least one radially outwardly offset retaining pin (150) which points axially in the direction of the upper part (20) of the housing (18), **in that** the anti-rotation element (80) comprises at least one pocket (152) on its side facing the lower part (22) of the housing (18), **and in that** each retaining pin (150) is received in a relevant associated pocket (152) and rests with its end face against the base of the pocket (152).

5. Operating device according to any of claims 1 to 4, **characterized in that** the anti-rotation element (80) comprises a trapezoidal geometry.

6. Operating device according to claim 5, **characterized in that** a base side (110) of the anti-rotation element (80) pointing toward the retaining device (44) comprises an axially aligned radial depression (112), **and in that** on both sides of said depression (112), in each case one radially inwardly directed contact surface (114, 116) is formed on the anti-rotation element (80).

7. Operating device according to either claim 5 or claim 6 with claim 4, **characterized in that** the anti-rotation element (80) is arranged in a form-fitting manner within a niche-like and approximately trapezoidal recess (120) in the wall (106) of the hollow-cylindrical receiving space (50).

8. Operating device according to claim 6 or according to claim 7 with claim 6, **characterized in that** the contact surfaces (114, 116) of the anti-rotation element (80) are at least slightly subject to play and are each positioned parallel to the contact surfaces (94,96) of the longitudinal ribs (90, 92) of the retaining device (44).

9. Operating device according to any of claims 5 to 8, **characterized in that** the retaining device (44) and the anti-rotation element (80) consist of the same material.

10. Operating device according to either claim 3 or claim 4, or according to any of claims 5 to 9 with claim 3, **characterized in that** the sealing element (28) is elastic and comprises at least two domes (126, 128) formed integrally thereon and aligned with their longitudinal extension parallel to the longitudinal central axis (52).

11. Operating device according to claim 10, **characterized in that** the axial length of the two domes (126, 128) of the sealing element (28) is such that, in the assembled state of the upper part (20) and lower part (22) of the housing (18) of the operating device (10), the anti-rotation element (80) is mechanically preloaded against the at least one retaining pin (150) of the lower part (22) of the housing (18) by means of the at least two domes (126, 128).

12. Operating device according to either claim 10 or claim 11,
**characterized in that** the at least two domes (126, 128) are positioned and connected to the sealing element (28) by means of a plurality of webs (130, 132, 134, 136) formed integrally on the sealing element (28).

13. Operating device according to any of the preceding claims, **characterized in that** the retaining device (44) comprises a circular feedthrough opening (188) radially on the inside, which opening is delimited in a wall-like manner by an annular shoulder (190) of the retaining device (44).

14. Operating device according to claim 13, **characterized in that** the piston (58) comprises an annular collar (192) radially on the inside and remote from the piston rod, which collar extends toward, without reaching, the lower side of a screw bolt (142) inserted through the through-opening (188), **and in that** the annular shoulder (190) of the retaining device (44) is arranged between the lower side of the screw bolt (142) and the collar (192) of the piston (58).

15. Operating device according to any of the preceding claims,
**characterized in that** the sensor assembly (30) is designed such that an axial position (X) of the piston (58) within the hollow-cylindrical receiving space (50) can be measured without contact.

16. Operating device according to claim 4 or according to any of claims 5 to 15 with claim 4, **characterized in that** the magnetic-field-sensitive sensor (32) is arranged radially outside the wall (106) surrounding the hollow-cylindrical receiving space (50).

## Revendications

1. Dispositif de commande (10) destiné à une boîte de vitesses automatisée (12) d'un véhicule automobile, à l'aide duquel dispositif de commande un élément de sélection ou de passage de vitesses de la boîte de vitesses peut être déplacé pour le réglage d'un couloir de passage de vitesses ou pour l'engagement ou le dégagement d'un rapport de boîte de vitesses, dans lequel le dispositif de commande (10) présente un boîtier (18) et un actionneur (54) fonctionnant sous pression et comportant un piston (58) et une tige de piston (64) pouvant être reliée à l'élément de sélection ou de passage de vitesses de la boîte de vitesses, dans lequel le piston (58) est disposé radialement et de manière étanche dans un espace de réception (50) cylindrique du boîtier (18) du dispositif de commande (10) et peut être déplacé coaxialement dans ledit espace de réception, dans lequel un système formant capteur (30) comportant un aimant (38) et un capteur (32) sensible au champ magnétique est présent, et dans lequel l'aimant (38) est disposé côté frontal, de manière éloignée de la tige de piston, sur le piston (58) à l'aide d'un dispositif de maintien (44), et le capteur (32) est disposé, de manière radiale par rapport à l'aimant (38), côté boîtier,
**caractérisé en ce que** le dispositif de maintien (44) est relié au piston (58) de manière à pouvoir tourner autour de l'axe central longitudinal (52) de l'espace de réception (50), **en ce que** le dispositif de maintien (44) présente une géométrie en forme de cylindre creux ou de segment cylindrique creux, **en ce qu'**un élément anti-rotation (80) en forme de barre ou de plaque est présent, lequel est reçu par complémentarité de forme au moins avec ses deux extrémités dans un évidement (120) associé dans le boîtier (18), **et en ce que** l'élément anti-rotation (80) traverse de manière sécante le dispositif de maintien (44) en forme de cylindre creux ou de segment cylindrique creux à distance de l'aimant (38) avec un faible jeu, moyennant quoi, bien qu'un mouvement axial et un mouvement de rotation du piston (58) soient possibles, un mouvement de rotation du dispositif de maintien (44) autour de l'axe central longitudinal (52) de l'espace de réception (50) est empêché.

2. Dispositif de commande selon la revendication 1, **caractérisé en ce que** le dispositif de maintien (44) présente deux nervures longitudinales (90, 92) orientées axialement, **en ce que** les nervures longitudinales (90, 92) présentent respectivement une surface d'appui (94, 96) plane tournée en direction de l'élément anti-rotation (80), **et en ce que** les surfaces d'appui (94, 96) sont disposées à une certaine distance l'une de l'autre le long d'une ligne sécante imaginaire (98) du dispositif de maintien (44).

3. Dispositif de commande selon la revendication 1 ou 2,
**caractérisé en ce que** le boîtier (18) est constitué d'une partie inférieure (22) et d'une partie supérieure (20) qui sont rendues étanches l'une par rapport à l'autre à l'aide d'un élément d'étanchéité (28).

4. Dispositif de commande selon la revendication 3,
**caractérisé en ce qu'**une paroi (106) de la partie inférieure (22) du boîtier (18) et délimitant l'espace de réception (50) présente au moins un tenon de maintien (150) disposé de manière décalée radialement vers l'extérieur et orienté axialement en direction de la partie supérieure (20) du boîtier (18), **en ce que** l'élément anti-rotation (80) présente au moins un compartiment (152) sur son côté dirigé vers la partie inférieure (22) du boîtier (18), **et en ce que** chaque tenon de maintien (150) est reçu dans un compartiment (152) respectivement associé et s'appuie, côté frontal, sur le fond du compartiment (152).

5. Dispositif de commande selon l'une des revendications 1 à 4,
**caractérisé en ce que** l'élément anti-rotation (80) présente une géométrie trapézoïdale.

6. Dispositif de commande selon la revendication 5, **caractérisé en ce qu'**un côté formant base (110) de l'élément anti-rotation (80) et tourné vers le dispositif de maintien (44) présente un renfoncement (112) radial orienté axialement, **et en ce que,** à proximité et de part et d'autre dudit renfoncement (112), respectivement une surface de contact (114, 116) orientée radialement vers l'intérieur est réalisée sur l'élément anti-rotation (80).

7. Dispositif de commande selon la revendication 5 ou la revendication 6 et la revendication 4, **caractérisé en ce que** l'élément anti-rotation (80) est disposé par complémentarité de forme à l'intérieur d'un évidement (120) en forme de niche et approximativement trapézoïdal dans la paroi (106) de l'espace de réception (50) cylindrique creux.

8. Dispositif de commande selon la revendication 6 ou selon la
revendication 7 et la revendication 6, **caractérisé en ce que** les surfaces de contact (114, 116) de l'élément anti-rotation (80) ont au moins un peu de jeu et sont respectivement positionnées parallèlement par rapport aux surfaces d'appui (94, 96) des nervures longitudinales (90, 92) du dispositif de maintien (44).

9. Dispositif de commande selon l'une des revendications 5 à 8,
**caractérisé en ce que** le dispositif de maintien (44) et l'élément anti-rotation (80) sont constitués du même matériau.

10. Dispositif de commande selon la revendication 3 ou la revendication 4 ou selon l'une des revendications 5 à 9 et la revendication 3, **caractérisé en ce que** l'élément d'étanchéité (28) est réalisé de manière élastique et présente au moins deux dômes (126, 128) formés intégralement sur celui-ci et qui sont orientés, avec leur extension longitudinale, parallèlement à l'axe central longitudinal (52).

11. Dispositif de commande selon la revendication 10, **caractérisé en ce que** la longueur axiale des deux dômes (126, 128) de l'élément d'étanchéité (28) est telle que, à l'état monté de la partie supérieure (20) et de la partie inférieure (22) du boîtier (18) du dispositif de commande (10), l'élément anti-rotation (80) est précontraint mécaniquement et de manière axiale à l'encontre de l'au moins un tenon de maintien (150) de la partie inférieure (22) du boîtier (18) à l'aide des au moins deux dômes (126, 128).

12. Dispositif de commande selon la revendication 10 ou 11,
**caractérisé en ce que** les au moins deux dômes (126, 128) sont positionnés et reliés à l'élément d'étanchéité (28) à l'aide d'une pluralité d'arêtes (130, 132, 134, 136) formées intégralement sur l'élément d'étanchéité (28).

13. Dispositif de commande selon l'une des revendications précédentes, **caractérisé en ce que** le dispositif de maintien (44) présente, radialement à l'intérieur, une ouverture de passage (188) circulaire qui est délimitée, à la manière d'une paroi, par un épaulement (190) annulaire du dispositif de maintien (44).

14. Dispositif de commande selon la revendication 13, **caractérisé en ce que** le piston (58) présente, radialement à l'intérieur et de manière éloignée de la tige de piston, une collerette (192) annulaire qui s'étend vers le côté inférieur d'un boulon fileté (142) inséré à travers l'ouverture de passage (188), sans l'atteindre, **et en ce que** l'épaulement (190) annulaire du dispositif de maintien (44) est disposé entre le côté inférieur du boulon fileté (142) et la collerette (192) du piston (58).

15. Dispositif de commande selon l'une des revendications précédentes, **caractérisé en ce que** le système formant capteur (30) est configuré de sorte qu'une position axiale (X) du piston (58) peut être mesurée sans contact à l'intérieur de l'espace de réception (50) cylindrique creux.

16. Dispositif de commande selon la revendication 4 ou selon l'une des revendications 5 à 15 et la revendication 4, **caractérisé en ce que** le capteur (32) sensible au champ magnétique est disposé radialement à l'extérieur de la paroi (106) délimitant l'espace de réception (50) cylindrique creux.
